# EUROPEAN PATENT APPLICATION

(11) **EP 3 636 119 A1**
(43) Date of publication of application: **15.04.2020**
(21) Application number: 20153484.9
(22) Date of filing: 24.01.2020
(51) Int. Cl.: A47J 36/32

(54) **CATERING AND COOKING DEVICE, COOKING SYSTEM AND USER TERMINAL**

(30) Priority: 30.01.2019 CN 201910093065; 30.01.2019 CN 201910093079
(71) Applicant: Qing Dao YuanJian Holding Group Limited, Qingdao City, Shandong 266000 (CN)
(72) Inventor: MU, Wei, Qingdao City, Shandong 266000 (CN)
(74) Representative: Kayahan, Senem

(57) **Abstract**

A catering and cooking device includes a machine body, a heating unit and/or a flow control unit, a control unit electrically connected to the heating unit and/or the flow control unit to control the heating unit and/or the flow control unit, and a network communication unit electrically connected to the control unit to receive processing process information to control water outlet time of a water reservoir. The catering and cooking device of the present invention receives processing process information corresponding to food via the network communication unit, controls the flow control unit to add liquid such as water or oil according to the received processing process information, and then controls the heating unit to heat according to a preset power map and heating time, the present invention can process different foods in a targeted manner.

## Description

### TECHNICAL FIELD

The present invention relates to the technical field of catering, particularly to a catering and cooking device, a cooking system and a user terminal.

### BACKGROUND

At present, with the acceleration of the pace of life, more and more people have no time to cook by themselves and have to choose food such as takeaway or fast food, however, at present, a takeaway market is the mixture of good and evil, many takeaway products are not only expensive but also unhygienic, not to mention the nutritional value, the tastes are different, the takeaway product cannot meet people's needs, and frequent consumption is bad for health, an equipment such as an instant noodle machine and so on can only cook noodles and require manual operation. It is difficult to effectively control heating time and temperature of each product to achieve the optimal state of food.

A catering and cooking device in the prior art has a single control. The artificial control of adding water and heating cannot meet the needs of people for food and the need for intelligent processing.

### SUMMARY

Embodiments of the present invention provide a catering and cooking device, a cooking system, and a user terminal, which are used to solve the foregoing technical problems.

In order to solve the problems mentioned in the technical background, an embodiment of the present invention provides a catering and cooking device, comprising a machine body, a heating unit, and/or a flow control unit, a control unit electrically connected to the heating unit and/or the flow control unit to control the heating unit and/or the flow control unit, and a network communication unit electrically connected to the control unit to receive processing process information to control water outlet time of a water reservoir..

As a further optimization of the present invention, the catering and cooking device further comprises an induction unit electrically connected to the network communication unit.

As a further optimization of the present invention, the induction unit comprises an image identifier and/or an NFC card reader.

As a further optimization of the present invention, the catering and cooking device further comprises a display unit electrically connected to the network communication unit.

As a further optimization of the present invention, the catering and cooking device further comprises a user input unit electrically connected to the control unit and/or the network communication unit.

As a further optimization of the present invention, the catering and cooking device further comprises a timing unit electrically connected to the control unit.

As a further optimization of the present invention, the machine body is provided thereon with a selection button electrically connected to and start the control unit.

As a further optimization of the present invention, a scanning head is provided on the machine body.

A catering and cooking system comprises a reading unit capable of converting selected ingredients into desired food, a customizing unit capable of receiving food tag information and corresponding to of the reading unit, and a control unit capable of executing cooking instructions of the ingredients according to the customizing unit, wherein the reading unit is electrically connected to the customizing unit, and the customizing unit is electrically connected to the control unit.

As a further optimization of the present invention, the reading unit comprises a scanning module capable of obtaining required food information via a QR code or a barcode.

As a further optimization of the present invention, the reading unit comprises a startup module capable of pressing the required food via an external button to read food information.

As a further optimization of the present invention, the customizing unit comprises: a pre-stored module pre-stored with a recipe corresponding to food in the selection module, the pre-stored module being electrically connected to the reading unit; a calling module for calling the food recipe in the pre-stored module according to the selected food, and a setting module for setting a set value according to the water amount, a cooking temperature and cooking time required by the recipe in the calling module, the setting module being electrically connected to the control unit, and the control unit controlling the water amount, the cooking temperature, and the cooking time according to setting information of the setting module.

As a further optimization of the present invention, a payment unit is further comprised, the payment unit being electrically connected to the control unit, and the control unit identifying that cooking instructions are executed after the payment unit completes payment.

As a further optimization of the present invention, the pre-stored module further stores price information corresponding to food label information; and the customizing unit can send the price information.

As a further optimization of the present invention, a customizing client terminal is further comprised, wherein the customizing client terminal comprises: a selection module capable of displaying a plurality of types of catering, the selection module being used by a user to select different caterings; a receiving module electrically connected to the selection module, the receiving module being configured to receive the user's selection information; and a payment module configured to pay a product after the user's selection is completed, wherein, the payment module is electrically connected to the control unit.

As a further optimization of the present invention, a selection module capable of displaying one or more food information and/or processing process information for selection by the user and sending out selection information is comprised.

An induction module electrically connected to the selection module and configured to sense and send food information is further comprised;

The selection module can receive and display food information.

The present invention is a business model of a catering and cooking device, based on the catering and cooking device according to claim 1, a user pays a fee and the user places selected cooked ingredients on the catering and cooking device, and starts the catering and cooking device until the catering and cooking device finishes cooking, and then removes a cooked food.

The beneficial effects of the present invention are as follows:
1. The catering and cooking device of the present invention receives the processing process information corresponding to the food via the network communication unit, and can control the flow control unit and/or the heating unit according to received processing process information to add liquids such as water or oil according to a set flow rate, and then control the heating unit to heat according to a preset power map and the preset heating time. The present invention can process different food in a targeted manner, can achieve the best cooking effect of different foods, has a simple structure, can process and cook the food via a memory system more conveniently and quickly, and can be placed in the store to meet the needs of the user when the user wants to buy and process the food;
2. The catering and cooking system of the present invention stores a variety of food label information, cooks and forms the required food for the ingredients selected by the user according to preset programs, automatically looks after the processing process information corresponding to the food label information after receiving the food label information, corresponding to different foods of the processing process information, sends out the processing process information so that the catering and cooking device can receive the processing process information and process according to the preset processing process information, the user only needs to start the system without other operations and wait for the formation of the food, the present invention is simple and fast, and does not limit the selected ingredients, which can be vegetables, seafood or meat, or semi-finished products such as instant noodles, the present invention can cook the ingredients according to the preset time and temperature in the system, meet the user's diverse choices, make the processing of the catering and cooking device more humane and intelligent, meanwhile, update the processing process information and the food label information in real time, be more convenient in launching new varieties of food and a new processing method to meet the user's diverse choices;
3. The user terminal of the present invention can display food information and/or the processing process information on the user terminal for the selection by the user, the user can select food and/or the processing method as needed and send the selected information to the catering and cooking device, the catering and cooking device receives this information and processes according to the corresponding information, if only food information is selected, the catering and cooking device processes according to the received preset processing process information, if the food and the processing method are selected, the catering and cooking device processes according to the selected processing method, which is simpler and can meet everyone's needs;
4. In the business model of the catering and cooking device of the present invention, any store has the catering and cooking device, which can provide the user with the service of selecting ingredients and fast processing.

Other features and advantages of the present invention will be explained in the following description, and partly become apparent from the description, or be understood by implementing the present invention. The objects and other advantages of the present invention can be achieved and obtained by the structures specifically pointed out in the written description, claims, and drawings.

The technical solution of the present invention will be described in further detail below with reference to the drawings and embodiments.

### BRIEF DESCRIPTION OF THE DRAWINGS

The drawings are used to provide a further understanding of the present invention, constitute a part of the specification and explain the present invention together with the embodiments of the present invention, and do not constitute a limitation on the present invention. In the drawings:
FIG. 1 shows a structural diagram I of a catering and cooking device of the present invention;
FIG. 2 shows a structural diagram II of a catering and cooking device of the present invention;
FIG. 3 shows a structural diagram III of a catering and cooking device of the present invention;
FIG. 4 shows a schematic diagram of a catering and cooking device of the present invention;
FIG. 5 shows a schematic diagram of a catering and cooking system of the present invention;
FIG. 6 shows a diagram of a customizing unit in FIG. 5;
FIG. 7 shows a schematic diagram of a user terminal of the present invention;
FIG. 8 shows a schematic diagram of an automatic cooking system of the present invention.

In the above figures: 1. Catering and Cooking Device; 11. Heating Unit; 12. Flow Control Unit; 13. Control Unit; 14. Network Communication Unit; 15. Induction Unit; 16. Display Unit; 17. User Input Unit; 18 , Timing Unit; 19, Positioning Unit; 100, Liquid Containing Cavity; 2, Catering and Cooking System; 21, Reading Unit; 22, Pre-Stored Module; 23, Customizing Unit; 3, User Terminal; 31, Selection Module; 32, Induction Module; 33. Payment Module.

### DETAILED DESCRIPTION OF THE EMBODIMENTS

The following describes preferred embodiments of the present invention with reference to the accompanying drawings, it should be understood that the preferred embodiments described herein are only used to illustrate and explain the present invention, and are not intended to limit the present invention.

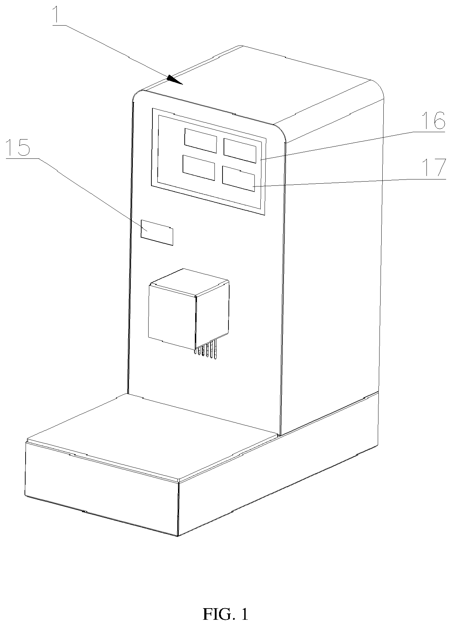

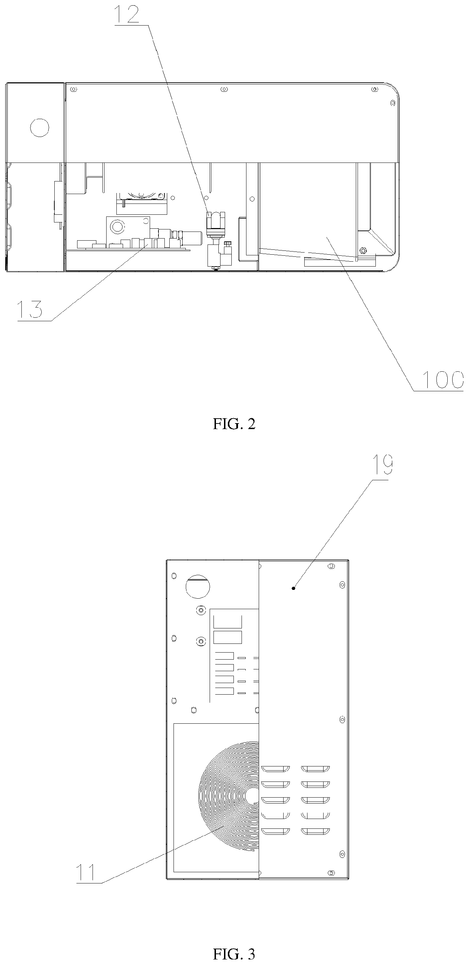

Referring to FIGS. 1-4, the present invention provides a catering and cooking device 1, comprising a machine body, a heating unit 11 and/or a flow control unit 12, control unit 13 electrically connected to the heating unit 11 and/or the flow control unit 12 to control the heating unit 11 and/or the flow control unit 12, and a network communication unit 14 electrically connected to the control unit 13 to receive processing process information, the network communication unit 14 can be a device in network connection such as WIFI or a network cable, can also be short-range wireless transmission, and is preferably a network connection device such as the WIFI or the network cable, the heating unit 11 is preferably an induction cooker, which is easier to control power or temperature, the flow control unit 12 is preferable a control method of a flow meter and a solenoid valve, and has more accurate control for the flow, other control methods can also be adopted, the catering and cooking device can be internally provided with a liquid containing cavity 100 or be externally provided with an liquid supply apparatus, and is connected to the flow control unit 12, the control unit is electrically connected to the liquid containing cavity, so as to control water outlet time of the liquid containing cavity. It should be noted that the liquid containing cavity can store hot water or cold water, and preferably stores the cold water. The advantage of storing cold water is that the heating temperature can be selected according to the needs of the required food without causing waste of hot water; the control unit 13 is a single-chip microcomputer or a microchip, when in use, the network communication unit 14 receives the processing process information and sends the processing process information to the control unit 13, the control unit 13 controls the heating unit 11 and/or the flow control unit 12 according to the processing process information to process the food, wherein the processing process information comprises information such as the amount of water added, a heating temperature, heating time, a heating power change curve and so on, so as to achieve delicate cooking for different foods, through the setting of the network communication unit 14, food label information and the corresponding processing process information can be updated at any time, it should be noted that the network communication unit 14 can also be used to receive payment information, for example, if payment is integrated, the network communication unit 14 sends this payment information to the control unit 13 after receiving the payment information, and the control unit 13 performs processing operations after receiving the payment information.

The catering and cooking device of the present invention receives the processing process information corresponding to the food via the network communication unit 14, and can control the flow control unit 12 and/or the heating unit 11 according to the received processing process information to add liquid such as water or oil according to a set flow, and then control the heating unit 11 to heat according to a preset power map and the heating time, which can process the different foods in a targeted manner, and can achieve the best cooking effect of the different foods.

Further, an induction unit electrically connected to the network communication unit 14 is further comprised, the induction unit 15 can sense the food label information and send the food label information to the network communication unit 14, the network communication module 14 sends the food label information and receives food processing process information corresponding to the food label information, which is simple and fast, and can automatically complete the corresponding processing process only by sensing, and the induction unit 15 preferably uses an image identifier and/or an NFC card reader and can effectively identify the food label information, the existing food often has corresponding information such as a bar code or a QR code, the image identifier can be used to identify the bar code or the QR code to obtain the food label information, if a food package is provided with an NFC tag, the food tag information can be read by the NFC card reader, the induction unit 15 can be arranged near a pallet for placing food at the catering and cooking device 1, corresponding to a food label, which is simpler and more convenient when in use, in addition, the induction unit 15 can also be used for receiving money, for example, the image identifier can receive money by scanning a payment QR code, for example, the NFC card reader can also receive money by a payment method such as swiping a card or touching a payment terminal of a mobile phone, for example, if the induction unit 15 is used to receive money, the induction unit 15 is electrically connected to the control unit 13, the control unit 13 performs a processing operation after receiving a payment signal.

Further, a display unit 16 electrically connected to the network communication unit 15 is further comprised, and the display unit 16 can be used to display information such as the food label information, the processing process information, price information, etc., and can also be used to display advertisement, the display unit 16 can be used to display, for example, a payment QR code, and the user can perform payment or other operations by scanning the payment QR code, the display unit 16 is preferably a display.

Further, a user input unit 17 electrically connected to the control unit 13 and/or the network communication unit 14 is further comprised, when in use, many processing processes need to be selected or confirmed by the user, for example, when processing starts, it is preferred to allow the user to confirm by clicking, for example, when a food involves a plurality of processing methods of different tastes or mouthfeels for the selection by the user, the control unit 13 processes according to the processing process information selected by the user, in addition, the control unit 13 can also be set to be input by the user, that is, the user inputs information such as added liquid flow, the heating time, the heating temperature and so on, the control unit 13 performs cooking according to the processing information input by the user, so as to meet the needs of different users, the control unit not only can be intelligently controlled, but also can be adjusted according to the needs of the user, the user input unit 17 is preferably a touch display integrated with the display unit 16, so that there is no need to separately arrange other devices.

Further, a timing unit 18 electrically connected to the control unit 13 is further comprised, so that each process can be controlled precisely, and a prompt such as a countdown can be performed according to the processing process, that is, display in real time how long processing time is in order to prompt the user, in addition, the user can also set a delay operation, etc. when the user performs processing, because heating is involved, for the user's safety, the user can set a delay start, and can cooperate with the display unit 16 to indicate when the user starts the device.

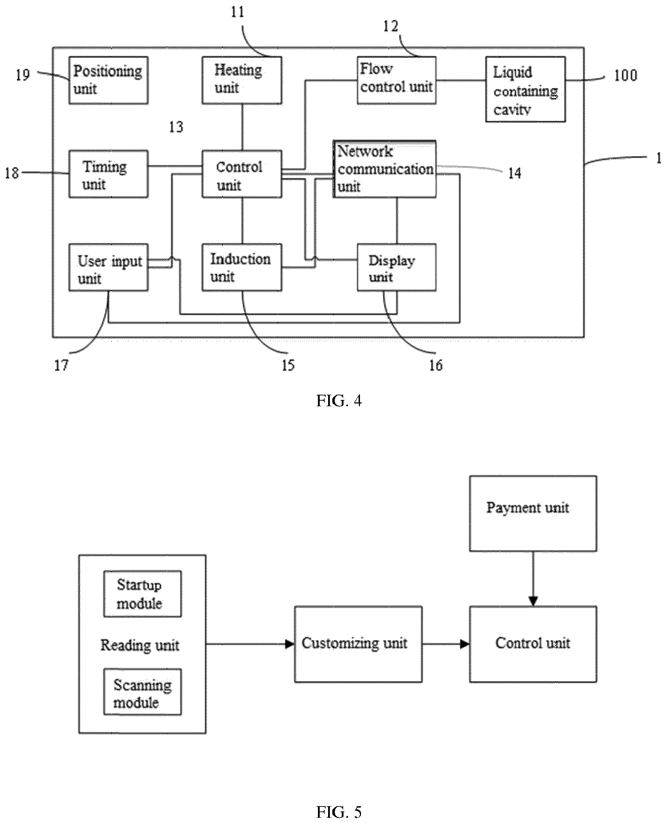

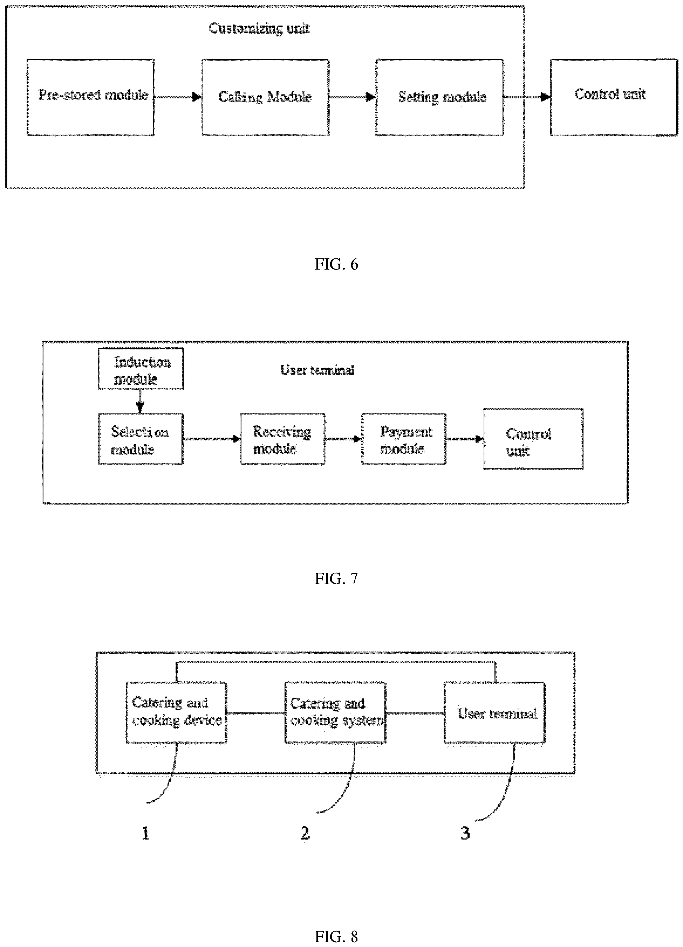

In addition, as shown in FIGS. 5 and 6, the present invention also provides a catering and cooking system, the catering and cooking system comprises a reading unit that can transform selected ingredients into a desired food, corresponding to a customizing unit of the reading unit, and a control unit capable of executing cooking instructions of the ingredients according to the customizing unit, wherein the reading unit is electrically connected to the customizing unit, and the customizing unit is electrically connected to the control unit.

In the above, the reading unit comprises a scanning module that can obtain the desired food information via the QR code or the barcode and can also comprise a startup module that can press the desired food via an external button to read the food information.

If the reading unit comprises a scanning module, the scanning module can scan the QR code or the barcode of the food or a client terminal such as a mobile phone to obtain the food information, and then call the pre-stored food cooking methods, comprising but not limited to the heating time, the heating temperature, heated water amount, etc. If the reading unit comprises the startup module, the required information can be obtained by setting a corresponding button on an external machine of the system and starting the reading unit by the button.

Through the setting of the above-mentioned customizing unit, the user selects ingredients to cook according to a preset program to form the desired food. The user only needs to start the system, and can wait for the formation of the food without any other operation, which is simple and fast, the selected ingredients are not limited and can be vegetables, seafood or meat, or can be semi-finished products such as instant noodles, etc., the user only needs to realize the cooking of the ingredients according to the preset time and temperature in the system to meet the user's diverse choices. The existing system generally can only make simple pasta, but this system can not only make the pasta, but also make other food, so as to meet the multi-taste needs of the user, and can also achieve a healthy diet through the selection of fresh ingredients.

As shown in FIG. 6, the customizing unit comprises a pre-stored module pre-stored with a recipe corresponding to food in the selection module, and the pre-stored module 22 also stores the price information corresponding to the food label information; the customizing unit 23 can send out the price information, the catering and cooking device 1 or the user terminal 3 can receive the corresponding price information, and after the user pays, the catering and cooking device 1 automatically completes the corresponding processing, thereby completing the automatic sales and processing of the food to meet the user's various requirements, the customizing unit comprises a calling module that more conveniently calls the food recipe in the pre-stored module according to the selected food, and a setting module that sets a set value according to water amount, a cooking temperature and cooking time required by the recipe in the calling module, the setting module is electrically connected to the control unit, the control unit controls the water amount, the cooking temperature, and the cooking time according to setting information of the setting module and stores a variety of food label information, corresponds to different food processing process information, after receiving the food label information, the control unit automatically looks after the processing process information corresponding to the food label information and sends out the processing process information so that the catering and cooking device 1 receives the processing process information and processes according to the preset processing process information, so that the processing of the catering and cooking device is more humane and intelligent. At the same time, the processing process information and the food label information can be updated in real time, which makes it easier to launch new varieties of food and the new processing method.

At the same time, the catering and cooking system of the present invention further comprises a payment unit electrically connected to the control unit, and the control unit identifies that the payment unit executes cooking instructions after payment is completed. The payment method of the payment unit can be various, such as scanning payment, cash payment or swiping-card payment, which is not limited herein.

Referring to FIG. 7, the present invention further provides a user terminal 3 that can be electrically connected to the catering and cooking device 1 described in any one of the preceding items and/or the catering and cooking system 2 described in any one of the preceding items, comprising:
A selection module 31 can display one or more food information and/or processing process information for the selection by the user and send out the selected information, the selection module 31 can display the food information that can be processed by the catering and cooking device 1, and can display the processing information of different foods, the food information comprises information such as price, taste, mouthfeel and the number of selected people, the processing process information comprises information such as the processing time, the water amount, the heating time, the heating temperature, etc., if a plurality of the processing methods are involved, the processing methods can all be displayed for the user to make a selection, after the user makes a selection, the information selected by the user is sent out, after the catering and cooking device 1 receives the information, the catering and cooking device 1 processes according to the method selected by the user, after receiving the information selected by the user, the catering and cooking system 2 sends the information selected by the user to the catering and cooking device 1, and the catering and cooking device 1 processes according to the processing method selected by the user.
further comprising:
An induction module 32 electrically connected to the selection module 31 and configured to sense and send the food information;
The selection module 31 can receive and display the food information, during use, if the user can directly select food before the food, the user can use the induction module 32 on the user terminal 3 to sense the food label information, and send the sensed food label information, the selection module 31 displays the food information and the processing information corresponding to the food label information, the food information comprises, but is not limited to, the price, the taste, the mouthfeel, etc., the food processing information comprises, but is not limited to information such as the processing time, the water amount, the heating time, the heating temperature, if a plurality of processing methods are involved, the processing methods can all be displayed for the selection by the user, after the user makes a selection, the user's selected information is sent out, after the catering and cooking device 1 receives the information, the catering and cooking device 1 processes according to the method selected by the user, after receiving the information selected by the user, the catering and cooking system 2 sends the information selected by the user to the catering and cooking device 1, the catering and cooking device 1 processes according to the processing method selected by the user, the induction module 32 is preferably an image identifier and/or an NFC reader and rapidly identifies corresponding to the existing tag of the food.

It should be noted that the catering and cooking system of the present invention further comprises a customizing client terminal, the customizing client terminal comprises the selection module capable of displaying a plurality of types of catering, the selection module is used for user to select different caterings; and the customizing client terminal comprises a receiving module electrically connected to the selection module, the receiving module is configured to receive the user's selection information; the user terminal 3 can further comprise a payment module 33 electrically connected to the selection module 31, and the payment module is configured to pay goods after the user completes the selection, the payment module is electrically connected to the control unit, when in use, by setting the customizing client terminal, the desired food can be selected and paid on the customizing client terminal, thereby starting the catering and cooking system, the user can choose to pay using the payment module 33 as required, and the payment information is sent by the user terminal 3, the catering and cooking device 1 starts the corresponding processing operation after receiving the payment information, it needs to be further explained that the user terminal 3 can be a device such as a computer, a mobile phone, or a PAD that can be networked and operated.

Further, the catering and cooking system of the present invention further comprises the customizing client terminal, the customizing client terminal comprises: a selection module capable of displaying a plurality of types of catering, the selection module being used for the user to select different caterings and being electrically connected to the selection module; a receiving module for receiving selection information of the user; a payment module for paying the goods after the user completes the selection, wherein the payment module is electrically connected to the control unit. By setting the customizing client, the desired food can be selected and paid on the custom client terminal to start the catering and cooking system.

Referring to FIG. 8, the present invention also provides an automatic cooking system, comprising the catering and cooking device 1, the catering and cooking system 2, and the user terminal 3 as described above, the user can directly use the catering and cooking device 1 on site and cooperate with the catering and cooking system 2 to realize automatic processing, the user terminal 3 can also be used to complete the selection and processes the food, the catering and cooking device 1 is provided thereon with a positioning unit 19, when the user uses the user terminal 3, the user can look after the near catering and cooking device 1, and select the nearest catering and cooking device 1 according to the needs to process.

At the same time, the present invention also provides a business model of the catering and cooking device, the business model is specifically to pay a fee and the user places the selected cooking ingredients on the catering and cooking device, and starts the catering and cooking device until the catering and cooking device finishes the cooking, and removes the cooked food. This business model is of high value, for example, taking an express store as an example, according to statistics, although the express store currently provides breakfast, lunch, and dinner, the form thereof is single, and breakfast accounts for a high proportion, less than 10% of the dinner is sold, but if the store adds one catering and cooking device, the user can choose the ingredients and wait for a few minutes to complete the cooking of the ingredients to form the desired food, from the perspectives of user needs and user interests, when the store is at the peak of providing meals every day, the user use the machine about 72 times, which increases the sales of the store virtually, at the same time, the user can also choose different ingredients through the customized client terminal, or one-click to form the desired food is recommended according to the customized client terminal, which is more convenient and fast, this method will inevitably be liked by consumers.

Obviously, a person skilled in the art can make various modifications and variations to the present invention without departing from the spirit and scope of the present invention. In this way, if these modifications and variations of the present invention fall within the scope of the claims of the present invention and the equivalent technologies thereof, the present invention also intends to comprise these modifications and variations.

## Claims

1. A catering and cooking device, comprising:
a machine body,
a heating unit and/or a flow control unit,
a control unit, and
a network communication unit;
wherein
the control unit is electrically connected to the heating unit and/or the flow control unit to control the heating unit and/or the flow control unit, and
the network communication unit is electrically connected to the control unit to receive processing process information to control a water outlet time of a water reservoir.

2. The catering and cooking device according to claim 1, further comprising an induction unit electrically connected to the network communication unit.

3. The catering and cooking device according to claim 2, wherein the induction unit comprises an image identifier and/or an NFC card reader.

4. The catering and cooking device according to claim 1, further comprising a display unit electrically connected to the network communication unit.

5. The catering and cooking device according to claim 1, further comprising a user input unit electrically connected to the control unit and/or the network communication unit.

6. The catering and cooking device according to claim 1, further comprising a timing unit electrically connected to the control unit.

7. The catering and cooking device according to claim 1, wherein a selection button is provided on the machine body, and the selection button is electrically connected to the control unit and starts the control unit.

8. The catering and cooking device according to claim 1, wherein a scanning head is provided on the machine body.

9. A catering and cooking system applicable to the catering and cooking device according to any one of claims 1 to 8, comprising:
a reading unit configured for transforming selected ingredients into desired food,
a customizing unit configured for receiving food tag information and corresponding to the reading unit, and
a control unit configured for executing cooking instructions of the selected ingredients according to the customizing unit;
wherein
the reading unit is electrically connected to the customizing unit, and the customizing unit is electrically connected to the control unit.

10. The catering and cooking system according to claim 9, wherein the reading unit comprises a scanning module configured for obtaining required food information via a QR code or a barcode.

11. The catering and cooking system according to claim 9, wherein the reading unit comprises a startup module configured for pressing the desired food via an external button to read food information.

12. The catering and cooking system according to any one of claims 9 to 11, wherein the customizing unit comprises: a pre-stored module pre-stored with a recipe corresponding to food in a selection module, the pre-stored module being electrically connected to the reading unit; a calling module for calling the recipe in the pre-stored module according to a selected food, and a setting module for setting a set value according to a water amount, a cooking temperature and a cooking time required by the recipe, the setting module being electrically connected to the control unit, and the control unit controlling the water amount, the cooking temperature, and the cooking time according to the set value of the setting module.

13. The catering and cooking system according to claim 12, further comprising a payment unit, wherein the payment unit is electrically connected to the control unit, and the control unit identifies that the cooking instructions are executed after the payment unit completes a payment.

14. The catering and cooking system according to claim 12, wherein the pre-stored module further stores price information corresponding to the food tag information; and the customizing unit sends the price information.

15. The catering and cooking system according to claim 9 or 10, further comprising a customizing client terminal, wherein the customizing client terminal comprises: a selection module configured for displaying a plurality of types of catering, the selection module being used by a user to select the plurality of types of catering; a receiving module electrically connected to the selection module, the receiving module being configured to receive selection information of the user; and a payment module configured to pay a product after the receiving module receives the selection information of the user, wherein, the payment module is electrically connected to the control unit.

16. A user terminal, wherein the user terminal is electrically connected to the catering and cooking device according to any one of claims 1-8 and/or the catering and cooking system according to any one of claims 9-15, comprising:
a selection module configured for displaying one or more food information and/or the processing process information for selection by a user and sending out selection information.

17. The user terminal according to claim 16, further comprising:
an induction module electrically connected to the selection module and configured to sense and send the one or more food information;
wherein the selection module receives and displays the one or more food information.

18. A business model based on the catering and cooking device according to claim 1, wherein a user pays a fee and the user places selected ingredients on the catering and cooking device, and starts the catering and cooking device until the catering and cooking device finishes cooking, and then removes a cooked food.
